Europäisches Patentamt

European Patent Office

Office européen des brevets

(11) Veröffentlichungsnummer: **0 140 141 B1**

(12) **EUROPÄISCHE PATENTSCHRIFT**

(45) Veröffentlichungstag der Patentschrift: **04.03.92**

(51) Int. Cl.⁵: **G06F 13/28**

(21) Anmeldenummer: **84111256.8**

(22) Anmeldetag: **20.09.84**

(54) **Schaltungsanordnung für den zeitgerechten Steuerzeichenaustausch zwischen einer zentralen Datenverarbeitungseinheit und einer dezentralen Funktionseinheit.**

(30) Priorität: **23.09.83 DE 3334495**

(43) Veröffentlichungstag der Anmeldung:
**08.05.85 Patentblatt 85/19**

(45) Bekanntmachung des Hinweises auf die
Patenterteilung:
**04.03.92 Patentblatt 92/10**

(84) Benannte Vertragsstaaten:
**AT BE CH DE FR GB IT LI NL SE**

(56) Entgegenhaltungen:
**US-A- 4 137 565**

**IBM TECHNICAL DISCLOSURE BULLETIN,
Band 25, Nr. 1, Juni 1982, Seiten 233-235,
New York, US; J.A. BREWER et al.: "Protocol
conversion from max mode to min mode**

**IBM TECHNICAL DISCLOSURE BULLETIN,
Band 22, Nr. 8B, Januar 1980, Seiten
3558-3561, New York, US; P.T. FAIRCHILD et
al.: "Microprocessor direct memory access
controls"**

**"The TTL Data Book", Texas Instruments
1979**

(73) Patentinhaber: **SIEMENS AKTIENGESELL-
SCHAFT
Wittelsbacherplatz 2
W-8000 München 2(DE)**

(72) Erfinder: **Böcker, Gerd, Dipl.-Ing.
Appenzeller Strasse 117
W-8000 München 71(DE)**
Erfinder: **Bronold, Josef, Dipl.-Ing. (FH)
Luitpoldstrasse 14
W-8034 Germering(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung für den zeitgerechten Steuerzeichenaustausch zwischen einer zentralen Datenverarbeitungseinheit, insbesondere einem Mikroprozessor und jeweils einer von mehreren dezentralen Funktionseinheiten über eine Steuereinheit, die bauprinzipbedingt eine andere Arbeitstaktfrequenz erfordert als die zentrale Datenverarbeitungseinheit und demnach mit einem vom Systemtakt der zentralen Datenverarbeitungseinheit abgeleiteten Arbeitstakt arbeitet, mit einer Synchronisierschaltung, durch die aufgrund einer Anforderung auf direkten Zugriff auf den Speicher der zentralen Datenverarbeitungseinheit durch Einschreiben oder Auslesen von Daten durch die dezentralen Funktionseinheiten von der Steuereinheit gesendete Anforderungssignale auf den vom Systemtakt der zentralen Datenverarbeitungseinheit abgeleiteten Arbeitstakt aufsynchronisiert werden, bevor sie an die dezentrale Datenverarbeitungseinheit gelangen.

Die obengenannte Konstellation liegt beispielsweise dann vor, wenn ein sogenannter direkter Datenzugriff (DMA = Direct Memory Access) praktiziert wird.

Die Zusammenarbeit zwischen einer zentralen Datenverarbeitungseinheit und dezentralen Funktionseinheiten spielt sich normalerweise in der Form ab, daß die dezentralen Funktionseinheiten von der zentralen Datenverarbeitungseinheit aufgrund von Ein- und Ausgabefehlern mit Daten aus deren Speicher versorgt werden. Beim DMA-Betrieb greifen die dezentralen Funktionseinheiten direkt auf den Speicher der zentralen Datenverarbeitungseinheit zu, indem sie Daten aus dem Speicher direkt abholen bzw. anderweitig empfangene Daten in diesem Speicher ablegen. Für diesen Vorgang ist ein gewisser Steuerzeichenaustausch erforderlich, der im wesentlichen in der Aussendung eines Anforderungssignals durch eine dezentrale Funktionseinheit an die zentrale Datenverarbeitungseinheit und einer Aussendung eines Bestätigungssignals durch die zentrale Datenverarbeitungseinheit an die dezentrale Funktionseinheit besteht. Die im Zusammenhang mit diesem Steuerzeichenaustausch erforderlichen Prozeduren werden von einer Steuereinheit (DMA-Controller) abgewickelt.

Gemäß der Patentschrift US-A-4 137 565 ist eine Schaltungsanordnung mit einer Steuereinheit zur Durchführung eines direkten Datenzugriffs einer dezentralen Funktionseinheit zu dem Speicher einer zentralen Datenverarbeitungseinheit über einen Datenbus bekannt, die im wesentlichen wie folgt arbeitet:

a) Die Steuereinheit wird aufgrund eines Anreizsignals der zentralen Datenverarbeitungseinheit periodisch aktiviert und leitet daraufhin den direkten Datenzugriff auf den Speicher ein, indem sie ein Anforderungssignal an die zentrale Datenverarbeitungseinheit sendet,

b) aufgrund des Anforderungssignals geht die zentrale Datenverarbeitungseinheit in den sogenannten Haltezustand über, indem sie die Ausgänge ihrer Datenbustreiberschaltungen hochohmig schaltet und der Steuereinheit ein Bestätigungssignal zurücksendet, das dieser anzeigt, daß sie nun die Kontrolle über den Datenbus erhalten hat;

c) die Steuereinheit führt daraufhin über den Datenbus den direkten Datenzugriff auf den Speicher der zentralen Datenverarbeitungseinheit durch.

In der Praxis kommt es häufig vor, daß als Steuereinheit eine Schaltung eingesetzt wird, die wegen ihrer Zugehörigkeit zu einer anderen Systemfamilie mit einem anderen Takt arbeitet als die zentrale Datenverarbeitungseinheit. Es wird daher, wie oben angegeben, der Takt für die Steuereinheit vom Systemtakt der zentralen Datenverarbeitungseinheit abgeleitet, insbesondere durch Untersetzung des Systemtakts. Zur Gewährleitung eines ordnungsgemäßen Steuerzeichenaustausches ist es dann erforderlich, das Anforderungssginal, das die Steuereinheit an die zentrale Datenverarbeitungseinheit liefert, auf den vom Systemtakt abgeleiteten Arbeitstakt zu synchronisieren, bevor es an die zentrale Datenverarbeitungseinheit gelangt.

Bei bisher realisierten Schaltungskonzepten, bei denen die Aufsynchronisierung mit Hilfe einer von dem vom Systemtakt abgeleiteten Arbeitstakt der Steuereinheit taktgesteuerten bistabilen Kippstufe vorgenommen wird, erkennt die zentrale Datenverarbeitungseinheit erst nach einer gewissen Verzögerung das Ende eines Anforderungssignals mit der Folge, daß auch das von ihr gelieferte Bestätigungssignal erst nach einer gewissen Zeitspanne wegfällt. Wenn zwischenzeitlich durch die Steuereinheit erneut ein Anforderungssignal abgesetzt worden ist, wird das noch von der vorangegangenen Anforderung bestehende Bestätigungssignal durch die Steuereinheit fälschlich als die Bestätigung der neuerlichen Anforderung interpretiert, woraufhin diese sich wieder auf die Vielfachleitung aufschaltet, über die der Speicherzugriff abgewickelt wird. Mit dem Ende des Bestätigungssignals schaltet sich aber auch die zentrale Datenverarbeitungseinheit wieder auf die Vielfachleitung auf, so daß es dann zu einer Datenkollision auf dieser Vielfachleitung kommt.

Aufgrund der periodischen Aktivierung der Steuereinheit gemäß der genannten US-Patentschrift kommt es dort nicht zu solchen Kollisionen.

Die Aufgabe der Erfindung besteht darin, eine Schaltungsanordnung der eingangs genannten Art dahingehend auszugestalten, daß beim Steuerzeichenaustausch zwischen der zentralen Datenverarbeitungseinheit und einer dezentralen Funktionseinheit es nicht zu fehlerhaften Betriebszuständen wie dem vorgenannten Kollisionsfall kommen kann.

Bei der erfindungsgemäßen Schaltungsanordnung führt, wie noch erläutert werden wird, die Beendigung eines Anforderungssignals unmittelbar, d.h. unabhängig von einem evtl. von der zentralen Datenverarbeitungseinheit noch andauernden Bestätigungssignals, zur Beendigung des entsprechenden an die dezentrale Funktionseinheit weitergegebenen Bestätigungssignals, hier des zweiten Bestätigungssignals, so daß zum Zeitpunkt des Auftretens eines neuen Anforderungssignals kein Bestätigungssignal mehr vorliegt.

Gemäß einer weiteren Ausgestaltung der Erfindung, die speziell im Hinblick auf den genannten Direktzugriff einer dezentralen Funktionseinheit zum Speicher der zentralen Datenverarbeitungseinheit konzipiert ist, weist eine solche Schaltungsanordnung eine erste Torschaltung auf, über die die zentrale Datenverarbeitungseinheit mit einer Vielfachleitung verbindbar ist, über die sie u.a. mit ihrem Speicher in Informationsaustausch treten kann und der als Torsignal das erste Bestätigungssignal zugeführt wird, ferner weist sie eine zweite Torschaltung auf, über die die dezentrale Funktionseinheit mit der genannten Vielfachleitung verbindbar ist und der hierzu von der Steuereinheit ein Torsignal zugeführt wird, wenn diese das genannte zweite Bestätigungssignal empfangen hat. Bei der erfindungsgemäß vorgesehenen Erzeugung der ersten und zweiten Bestätigungssignale bedeutet dies, daß bei einer dezentralen Funktionseinheit ein Bestätigungssignal, hier das zweite Bestätigungssignal, nicht länger ansteht als die Zeitdauer des entsprechenden Anforderungssignals, das aufgrund dieses Anforderungssignals entstandene erste Bestätigungssignal, das die zentrale Datenverarbeitungseinheit von der Vielfachleitung abtrennt, aber erste eine gewisse Zeitspanne nach Wegfall des auslösenden Anforderungssignals wegfällt, womit die Möglichkeit eines gleichzeitigen Zugriffs der zentralen Datenverarbeitungseinheit und der dezentralen Funktionseinheit auf die gemeinsame Vielfachleitung praktisch ausgeschlossen ist.

Nachstehend wird die Erfindung anhand eines Ausführungsbeispiels unter Bezugnahme auf die Zeichnung näher erläutert. In der Zeichnung zeigen:

Figur 1    ein Blockschaltbild zur Veranschaulichung der Verhältnisse bei einem direkten Datenzugriff im Zusammenhang mit einer Fernsprechvermittlung.

Figur 2    ein Ausführungsbeispiel der erfindungsgemäßen Schaltungsanordnung wie sie bei einem Steuerzeichenaustausch zwischen einer zentralen Datenverarbeitungseinheit und einer dezentralen Funktionseinheit im Zusammenhang mit einem derartigen direkten Speicherzugriff zur Anwendung kommt.

Figur 3    ein Impulsdiagramm, das die zeitlichen Signalverläufe an einzelnen Punkten der Schaltungsanordnung gemäß Figur 2 zeigt.

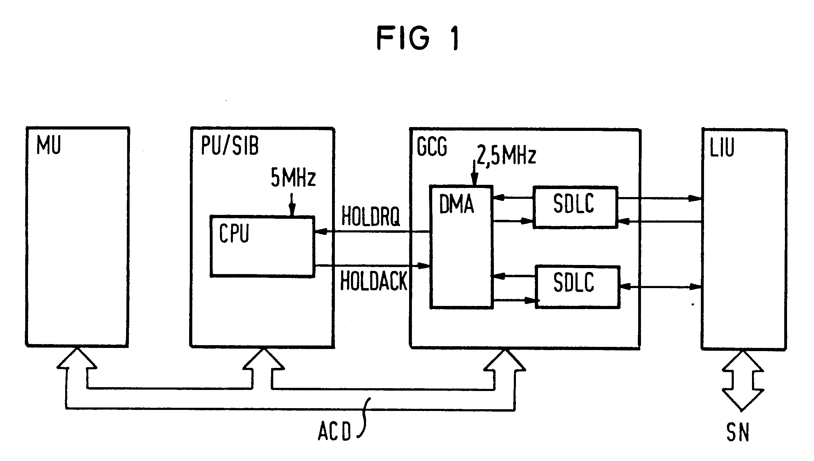

Die Figur 1 zeigt eine Baugruppe PU/SIB, von deren Bestandteilen hier lediglich ein Mikroprozessor CPU interessiert, der im vorliegenden Zusammenhang als die sogenannte zentrale Datenverarbeitungseinheit zu verstehen ist.

Eine Baugruppe MU stellt eine Speichereinheit dar, die einen Programm- und Datenspeicher enthält.

Die Figur zeigt ferner eine Baugruppe GCG, die Baueinheiten SDLC sowie eine Baueinheit DMA enthält. Bei den Baueinheiten SDLC handelt es sich um im Sinne der Erfindung periphere Baueinheiten, die mit dem Mikroprozessor CPU der Baugruppe PU/SIB über die als Steuereinheit anzusehende Einheit DMA im Steuerzeichenaustausch stehen, der mit dem direkten Speicherzugriff der peripheren Funktionseinheiten SDLC zu den Speichern der Speichereinheit MU zusammenhängt.Bei einem derartigen direkten Speicherzugriff erfolgt die Datenversorgung der Einheiten SDLC nicht wie üblich durch diesen Mikroprozessor CPU sondern direkt über eine gemeinsame Vielfachleitung ACD.

Bei dem Mikroprozessor CPU handelt es sich um den Gruppenprozessor einer digitalen Fernsprechvermittlungsstelle , der für eine Gruppe von Teilnehmerleitungen und Verbindungsleitungen Vermittlungsaufgabe wahrnimmt. Die peripheren Einheiten SDLC dienen in diesem Fall der Abwicklung des Datenaustausches zwischen dem Gruppenprozessor und einen Zentralprozessor,der, wie ebenfalls in der Figur angedeutet, über eine Schnittstelle LIU sowie über ein nicht dargestelltes Koppelfeld SN abgewickelt wird.

Die Datenverarbeitungseinheit CPU möge hier mit einem Systemtakt von beispielsweise 5 MHz arbeiten, wogegen die Steuereinheit, da sie einer anderen Systemfamilie angehört, einen Arbeitstakt von z.B. 2,5 MHz hat.Es wird ihr daher der Systemtakt der Datenverarbeitungseinheit CPU in entsprechender Untersetzung zugeführt.

Bei einem direkten Zugriff einer peripheren Funktionseinheit SDLC zu einem Speicher der Baugruppe MU spielen sich folgende Vorgänge ab. Die periphere Funktionseinheit meldet der Steuereinheit DMA ihren Zugriffwunsch. Die Steuereinheit DMA sendet daraufhin an die zentrale Datenverarbeitungseinheit CPU ein Anforderungssignal, das die Aufforderung darstellt, das Zugriffsrecht auf die Vielfachleitung ACD an die dezentrale Funktionseinheit SDLC abzutreten. Die zentrale Datenverarbeitungseinheit koppelt sich daraufhin, nachdem ein gerade durch sie in Gang befindliche Prodezur abgewickelt ist, von der Vielfachleitung ACD ab und sendet an die Steuereinheit ein Signal, das das Zugriffsrecht der dezentralen Funktionseinheit bestätigt. Die Steuereinheit gibt ein entsprechendes Bestätigungssignal an die dezentrale Funktionseinheit weiter, adressiert über die Vielfachleitung einen Speicherplatz in der Speichereinheit MU und sendet zum Speicher ein Lesekommando und zur dezentralen Funktionseinheit ein Schreibkommando mit der Folge, daß aus dem Speicher ein Datenbyte ausgelesen, auf der Vielfachleitung ACD übertragen und von der dezentralen Funktionseinheit übernommen wird. Nunmehr werden die Anforderungssignale weggenommen, woraufhin die Datenverarbeitungseinheit CPU, die dies erkennt, das Bestätigungssignal wegnimmt und sich wieder auf die Vielfachleitung ACD aufschaltet.

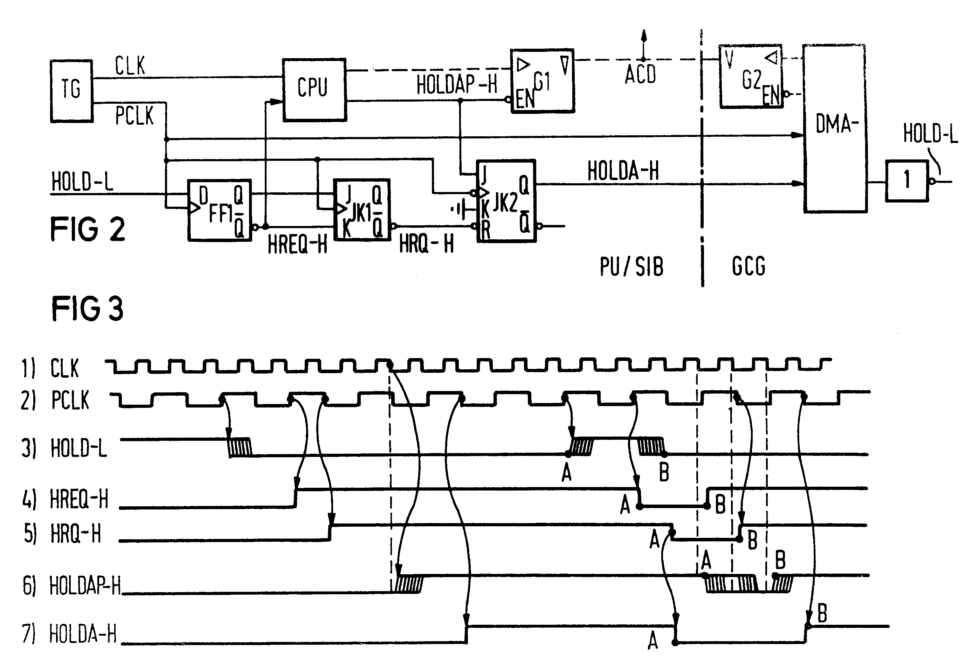

In der Figur 2 sind nun Schaltungsteile, die bei dem geschilderten Steuerzeichenaustausch eine Rolle spielen und insbesondere die gemäß der Erfindung vorgesehenen Schaltungsteile mehr ins Einzelne gehend dargestellt.

Die Figur zeigt zunächst wieder die zentrale Datenverarbeitungseinheit CPU sowie die Steuereinheit DMA.

Ein Taktgenerator TG liefert den Systemtakt CLK für die Datenverarbeitungseinheit CPU, siehe hierzu auch Zeile 1 in Figur 3, sowie den demgegenüber untersetzten Arbeitstakt PCLK für die Steuereinheit DMA, siehe hierzu Zeile 2 in Figur 3.

Der genannte untersetzte Arbeitstakt PCLK wird außerdem dem Takteingang eines D-Flip-Flop FF1 zugeführt, an dessen D-Eingang das von der Steuereinheit DMA gelieferte Anforderungssignal HOLD-L (Zeile 3 in Fig.3) zugeführt wird. Die Ausgänge Q und $\overline{Q}$ des Flip-Flop FF1 liefern demnach das auf den Arbeitstakt der Steuereinheit DMA aufsynchronisierte Anforderungssignal HREQ-H, siehe Zeile 4 in Fig.3,bzw. dessen invertierten Wert.Das synchronisierte Anforderungssignal HREQ-H gelangt,wie dargestellt an einen Steuereingang der Datenverarbeitungseinheit CPU. Erfindungsgemäß ist eine erste taktflankengesteuerte bistabile Kippstufe in Form eines JK-Flip-Flop JK1 vorgesehen, dessen K-Eingang mit dem $\overline{Q}$-Ausgang und dessen J-Eingang mit dem $\overline{Q}$-Ausgang des Flip-Flop FF1 verbunden ist. Der Takteingang dieses Flip-Flop wird ebenfalls vom Arbeitstakt der Steuereinheit beaufschlagt. Die Realisierung dieser ersten Kippstufe JK1 könnte anstelle eines JK-Flip-Flop ebensogut mit einem D-Flip-Flop erfolgen,dessen D-Eingang dann mit dem Q-Ausgang des Flip-Flop FF1 verbunden wird.

Gemäß der Erfindung ist außerdem eine zweite taktflankengesteuerte bistabile Kippstufe in Form eines JK-Flip-Flop JK2 vorgesehen, an dessen Takteingang ebenfalls der Arbeitstakt der Steuereinheit liegt. Ein Rückstelleingang R dieses Flip-Flop JK2 ist mit dem $\overline{Q}$-Ausgang des Flip-Flop JK1 verbunden.

An den J-Eingang des Flip-Flop JK2 gelangt ein erstes Bestätigungssignal HOLDAP-H, siehe Zeile 6 in Fig. 3, das von der Datenverarbeitungseinheit CPU aufgrund des Empfangs des genannten synchronisierten Anforderungssignals HREQ-H abgegeben wird.

Der Ausgang Q des Flip-Flop JK2 liefert ein zweites Beständigungssignal HOLDA-H, siehe Zeile 7 in Fig. 3, das an einen Steuereingang der Steuereinheit DMA gelangt.

Weiterer Bestandteil der Schaltungsanordnung gem.Fig.2 sind Torschaltungen G1 und G2, über die die Datenverarbeitungseinheit CPU bzw. die Steuereinheit DMA auf die schon erwähnte Vielfachleitung ACD geschaltet werden können, über die u.a. der direkte Speicherzugriff der dezentralen Funktionseinheit zum Speicher der Datenverarbeitungseinheit erfolgt.

Die Datenverarbeitungseinheit CPU ist von der Vielfachleitung abgekoppelt, solange das von ihr aufgrund einer Anforderung durch die dezentrale Funktionseinheit abgegebene Bestätigungssignal HOLDAP-H am Eingang EN der Torschaltung G1 anliegt. Die Steuereinheit DMA schaltet sich durch Beaufschlagung des Eingangs EN der Torschaltung G2 auf die Vielfachleitung auf.

Nachstehend wird noch näher auf die Betriebsweise der Schaltungsanordnung gemäß Figur 2 eingegangen.

Wie die Zeile 3 in Figur 3 zeigt, ist der Flankenwechsel des Signals HOLD-L,das im Falle einer Anforderung durch die dezentrale Funktionseinheit bzw. die Steuereinheit auftritt, zeitlichen Schwankungen unterworfen, die auf Laufzeiteffekte zurückzuführen sind. Der Vergleich der Zeile 2, die den Verlauf des Arbeitstaktes PCLK für die Steuereinheit DMA zeigt, auf den das Anforderungssignal mit Hilfe des D-Flip-Flop FF1 aufsynchronisiert wird, mit dem von dieser Kippstufe abgegebenen synchronisierten Anforderungssignal HREQ-H zeigt, daß unabhängig von den genannten Laufzeitschwankungen eine feste Beziehung zwischen Arbeitstakt und Flanken des Anforderungssignals hergestellt ist.

Entsprechendes gilt für das Signal HRQ-H, das das erste JK-Flip-Flop JK1 an seinem Ausgang $\overline{Q}$ abgibt.

Das Signal HREQ-H, das auch der Datenverarbeitungseinheit CPU zugeführt wird und das dort in einem bestimmten Raster des Systemtaktes CLK abgetastet wird,führt zur Abgabe eines ersten Bestätigungssignals HOLDAP-H,siehe Zeile 6 in Figur 3. Dieses erste Bestätigungssignal bewirkt einerseits durch Beeinflussung der Torschaltung G1 das Abkoppeln der Datenverarbeitungseinheit CPU von der Vielfachleitung ACD,andererseits einen Schaltzustandswechsel beim zweiten JK-Flip-Flop JK2 und damit die Abgabe eines zweiten Bestätigungssignals HOLDA-H, siehe Zeile 7 in Figur 3, dessen Anstiegsflanke wieder eine feste Relation zum Arbeitstakt der Steuereinheit hat. Aufgrund des zweiten Bestätigungssignals HOLDA-H erfolgt dann wie dargelegt die Ankopplung der Steuereinheit DMA an die Vielfachleitung sowie ein Datenaustausch zwischen der dezentralen Funktionseinheit und dem Speicher der Speichereinheit.

Wenn nun die Anforderung durch die dezentrale Funktionseinheit beendet wird,siehe hierzu die Punkte A in den Zeilen 3 bis 5, dann führt dies dazu, daß das zweite Bestätigungssignal HOLDA-H, das an die Steuereinheit DMA gelangt, in relativ geringem Zeitabstand ebenfalls einen Flankenwechsel erfährt, siehe Punkt A in Zeile 7. Dieser Flankenwechsel ist unabhängig von einen Flankenwechsel des von der Datenverarbeitungseinheit CPU abgegebenen ersten Bestätigungssignals HOLDAP-H, der wegen der Verarbeitungszeit und Abtastverhältnisse mit einer gewissen Verzögerung auftritt und ,wie der Vergleich der Zeilen 6 und 7 zeigt, nach dem Flankenwechsel des Signals HOLDA-H liegt. Das Wiederaufschalten der Datenverarbeitungseinheit CPU auf die Vielfachleitung ACD erfolgt also auf jeden Fall eine gewisse Zeitspanne später als der Wegfall des zweiten Bestätigungssignals HOLDA-H. Andererseits kann ein erneutes zweites Bestätigungssignal HOLDA-H aufgrund einer erneuten Anforderung,siehe Punkte B in den Zeilen 3 bis 5,erst dann wieder auftreten, wenn die Datenverarbeitungseinheit CPU wieder ein erstes Bestätigungssignal HOLDAP-H geliefert hat, was gleichzeitig die erneute Abkopplung der Datenverarbeitungseinheit von der Vielfachleitung ACD mit sich bringt, vgl. die Punkte B in den Zeilen 6 und 7. Damit ist aber mit Sicherheit vermieden, daß aufgrund einer Fehlinterpretation eines zwar noch nicht weggenommenen, aber nicht mehr gültigen Bestätigungssignals sowohl die Datenverarbeitungseinheit CPU als auch die Steuereinheit DMA auf die Vielfachleitung ACD arbeiten.

## Patentansprüche

1. Schaltungsanordnung für den zeitgerechten Steuerzeichenaustausch zwischen einer zentralen Datenverarbeitungseinheit, insbesondere einem Mikroprozessor (CPU) und jeweils einer von mehreren dezentralen Funktionseinheiten (SDLC) über eine Steuereinheit (DMA), die bauprinzipbedingt eine andere Arbeitstaktfrequenz erfordert als die zentrale Datenverarbeitungseinheit und demnach mit einem vom Systemtakt (CLK) der zentralen Datenverarbeitungseinheit abgeleiteten Arbeitstakt (PCLK) arbeitet, mit einer Synchronisierschaltung (FF1), durch die aufgrund einer Anforderung auf direkten Zugriff auf den Speicher der zentralen Datenverarbeitungseinheit durch Einschreiben oder Auslesen von Daten durch die dezentralen Funktionseinheiten von der Steuereinheit gesendete Anforderungssignale (HOLD-L) auf den vom Systemtakt der zentralen Datenverarbeitungseinheit abgeleiteten Arbeitstakt aufsynchronisiert werden, bevor sie an die zentrale Datenverabeitungseinheit gelangen,
**gekennzeichnet durch**
eine durch eine Taktflanke des genannten Arbeitstaktes (PCLK) getriggerte erste bistabile Kippstufe (JK1), durch die ein synchronisiertes Anforderungssignal (HREQ-H) um eine halbe Periode des Arbeitstaktes (PCLK) verzögert abgetastet wird und als ein verzögertes Anforderungssignal (HRQ-H) an deren Ausgang erscheint,
eine durch eine Taktflanke des Arbeitstaktes (PCLK) getriggerte zweite bistabile Kippstufe (JK2), durch die ein von der zentralen Datenverabeitungseinheit (CPU) aufgrund des von ihr empfangenen synchronisierten Anforderungssignals (HREQ-H) abgegebenes erstes Bestätigungssignal (HOLDAP-H) um wenigstens eine halbe Periode des Arbeitstaktes verzögert abgetastet wird und als ein zweites Bestätigungssignal (HOLDA-H) an die Steuereinheit weitergegeben wird, und die durch das verzögerte Anforderungssignal (HRQ-H) der ersten bistabilen Kippstufe (JK1) zurückgesetzt wird, wobei das zweite an die Steuereinheit (DMA) abgegebene Bestätigungssignal (HOLDA-H) bewirkt, daß die betreffende dezentrale Funktionseinheit die mit dem Anforderungssignal angekündigte Prozedur ausführt.

2. Schaltungsanordnung nach Anspruch 1, **dadurch gekennzeichnet,** daß die erste bistabile Kippstufe(JK1) ein JK-Flip-Flop ist.

3. Schaltungsanordnung nach Anspruch 1, **dadurch gekennzeichnet,** daß die erste bistabile Kippstufe (JK1) ein D-Flip-Flop ist, dessen D-Eingang vom invertierten Wert des synchronisierten Anforderungssignals (HREQ-H) beaufschlagt wird.

4. Schaltungsanordnung nach Anspruch 1 zur Durchführung eines Direktzugriffs der dezentralen Funktionseinheit zum Speicher der zentralen Datenverarbeitungseinheit,

**gekennzeichnet durch**

eine erste Torschaltung (G1), über die die zentrale Datenverarbeitungseinheit (CPU) mit einer Vielfachleitung (ACD) verbindbar ist, über die sie u.a. mit ihrem Speicher in Informationsaustausch treten kann und der als Torsignal das erste Bestätigungssignal (HOLDAP-H) zugeführt wird, sowie durch eine zweite Torschaltung (G2), über die die dezentrale Funktionseinheit mit der genannten Vielfachleitung (ADC) verbindbar ist und der hierzu von der Steuereinheit (DMA) ein Torsignal zugeführt wird, wenn diese das genannte zweite Bestätigungssignal (HOLDA-H) empfangen hat.

## Claims

1. Circuit arrangement for the correctly timed control signal exchange between a central data processing unit, particularly a microprocessor (CPU) and in each case one of several decentralised functional units (SDLC) via a control unit (DMA) which, due to its design, requires a different operating-clock frequency than the central data processing unit and accordingly operates with an operating clock (PCLK) extracted from the system clock (CLK) of the central data processing unit, comprising a synchronising circuit (FF1) by means of which, due to a request for direct access to the memory of the central data processing unit, by writing-in or reading-out of data by the decentralised functional units, request signals (HOLD-L) sent by the control unit are synchronised to the operating clock extracted from the system clock of the central data processing unit before they reach the central data processing unit, characterised by a first bistable flip flop (JK1) triggered by a clockpulse edge of the said operating clock (PCLK), by means of which a synchronised request signal (HREQ-H) is sampled with a delay of half a period of the operating clock (PCLK) and appears at its output as a delayed request signal (HRQ-H),
a second bistable flip flop (JK2) triggered by a clock-pulse edge of the operating clock (PCLK), by means of which a first acknowledgement signal (HOLDAP-H), output by the central data processing unit (CPU) on the basis of the synchronised request signal (HREQ-H) received by it, is sampled with a delay of at least half a period of the operating clock and is forwarded to the control unit as a second acknowledgement signal (HOLDA-H), and which is reset by the delayed request signal (HRQ-H) of the first bistable flip flop (JK1), the second acknowledgement signal (HOLDA-H) output to the control unit (DMA) having the effect that the relevant decentralised functional unit executes the procedure announced with the request signal.

2. Circuit arrangement according to Claim 1, characterised in that the first bistable flip flop (JK1) is a JK flip flop.

3. Circuit arrangement according to Claim 1, characterised in that the first bistable flip flop (JK1) is a D-type flip flop, to the D input of which the inverted value of the synchronised request signal (HREQ-H) is applied.

4. Circuit arrangement according to Claim 1 for carrying out a direct access of the decentralised functional unit to the memory of the central data processing unit, characterised by a first gate circuit (G1) via which the central data processing unit (CPU) can be connected to a multiple line (ACD) via which it can communicate with, among other things, its memory and which is supplied with the first acknowledgement signal (HOLDAP-H) as gate signal, and by a second gate circuit (G2) via which the decentralised functional unit can be connected to the said multiple line (ACD) and which is supplied with a gate signal from the control unit (DMA) for this purpose when the latter has received the said second acknowledgement signal (HOLDA-H).

## Revendications

1. Montage pour l'échange chronologique de signaux de commande entre une unité centrale de traitement de données, notamment un microprocesseur (CPU), et respectivement l'une de plusieurs unités fonctionnelles décentralisées (SDLC) par l'intermédiaire d'une unité de commande (DMA), qui requiert, en raison du principe de construction, une fréquence de cadence de travail autre que celle de l'unité centrale de traitement de données et par conséquent travaille avec une cadence de travail (PCLK) dérivée de la cadence système (CLK) de l'unité centrale de traitement de données, et comportant un circuit de synchronisation (FF1), qui, sur la base d'une demande d'accès direct à la mémoire de l'unité décentralisée de traitement de données, synchronise des signaux de demande (HOLD-L) émis par l'unité de commande au moyen de l'enregistrement ou de la lecture de données à l'aide des unités fonctionnelles décentralisées, sur la cadence de travail dérivée de la cadence système de l'unité décentralisée de traitement de données, avant que ces signaux parviennent à l'unité centrale de traitement de données, caractérisé par

un premier étage à bascule bistable (JK1), qui est déclenché par un flanc de ladite cadence de travail (PCLK) et au moyen duquel un signal de demande synchronisée (HREQ-H) est exploré d'une manière retardée d'une demi-période de la période de travail (PCLK) et apparaît à la sortie de cet étage à bascule en tant que signal de demande retardée (HRQ-H), un second étage à bascule bistable (JK2), qui est déclenché par un flanc de la cadence de travail (PCLK) et au moyen duquel un premier signal de confirmation (HOLDAP-H) délivré par l'unité centrale de traitement de données (CPU) sur la base du signal de demande (HREQ-H) synchronisée, reçue par cette unité, est exploré avec un retard égal au moins à une moitié de la période de la cadence de travail et est retransmis à l'unité de commande en tant que second signal de confirmation (HOLDA-H), et qui est ramené à l'état initial par le signal de demande retardé (HRQ-H) du premier étage à bascule bistable (JK1), le second signal de confirmation (HOLDA-H) envoyé à l'unité de commande (DMA) agissant de telle sorte que l'unité fonctionnelle décentralisée considérée exécute la procédure annoncée avec le signal de demande.

2. Montage suivant la revendication 1, caractérisé par le fait que le premier étage à bascule bistable (JK1) est une bascule bistable de type JK.

3. Montage suivant la revendication 1, caractérisé par le fait que la première bascule bistable (JK1) est une bascule bistable de type D, dont l'entrée D est chargée par la valeur inversée du signal de demande synchronisé (HREQ-H).

4. Montage suivant la revendication 1 pour la mise en oeuvre d'un accès direct de l'unité fonctionnelle décentralisée à la mémoire de l'unité centrale de traitement de données, caractérisé par

un premier circuit de porte (G1), au moyen duquel l'unité centrale de traitement de données (CPU) peut être raccordée à une ligne multiple (ACD) au moyen de laquelle elle peut échanger des informations notamment avec sa mémoire, et à laquelle est envoyé, en tant que signal de porte, le premier signal de confirmation (HOLDAP-H), ainsi que par un second circuit de porte (G2), par l'intermédiaire duquel l'unité fonctionnelle décentralisée peut être raccordée à ladite ligne multiple (ADC) et à laquelle un signal de porte est envoyé à cet effet par l'unité de commande (DMA) lorsque cette unité a reçu ledit second signal de confirmation (HOLDA-H).

EP 0 140 141 B1

# FIG 1

FIG 2

HOLD-L

DMA-

GCG

PU/SIB

ACD

HOLDA-H

HOLDAP-H

HREQ-H

HRQ-H

CPU

TG

CLK

PCLK

HOLD-L

FIG 3

1) CLK
2) PCLK
3) HOLD-L
4) HREQ-H
5) HRQ-H
6) HOLDAP-H
7) HOLDA-H